(19) Europäisches Patentamt
European Patent Office
Office européen des brevets

(11) **EP 4 249 978 A1**

(12) **EUROPEAN PATENT APPLICATION**

(43) Date of publication:
**27.09.2023 Bulletin 2023/39**

(21) Application number: **22163526.1**

(22) Date of filing: **22.03.2022**

(51) International Patent Classification (IPC):
**G02B 7/02** (2021.01)     **G02B 7/10** (2021.01)
**G02B 13/00** (2006.01)     **F03G 7/06** (2006.01)
**G03B 5/00** (2021.01)     G02B 15/14 (2006.01)

(52) Cooperative Patent Classification (CPC):
**G02B 7/023; F03G 7/0613; F03G 7/06143;
F03G 7/0665; G02B 7/102; G02B 13/009;
G03B 5/00;** G02B 15/14

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Goodix Technology (HK) Company
Limited
Sheung Shui (HK)**

(72) Inventors:
• **HOPWOOD, Michael Peter
6537 TL Nijmegen (NL)**

• **GAASBEEK, Rolf Iwan
6537 TL Nijmegen (NL)**
• **PHAN LE, Kim
6537 TL Nijmegen (NL)**
• **HUIJSER, Jan Paulus Freerk
6537 TL Nijmegen (NL)**
• **DE BUYS, Frans Victor Felix
6537 TL Nijmegen (NL)**

(74) Representative: **Nederlandsch Octrooibureau
P.O. Box 29720
2502 LS The Hague (NL)**

(54) **SHAPE-MEMORY-ALLOY ACTUATOR ASSEMBLY**

(57)     Actuator assembly (1) for positioning a moveable, e.g. optical, element (2) in one of at least two stable positions with respect to a frame body (3) along a movement axis (Z). The actuator assembly (1) has a multi-stable positioning mechanism (4), and a plurality of shape-memory-alloy, SMA, wires (5a, 5b). The multi-stable positioning mechanism (4) is attached to the moveable element (2) and the frame body (3) and arranged to hold the mutual position of the moveable element (2) and the frame body (3) in one of the at least two stable positions along the movement axis (Z). The plurality of SMA wires (5a, 5b) are attached to the moveable element (2) and the frame body (3), and arranged to apply a force between the moveable element (2) and the frame body (3) upon actuation.

Fig. 1A

EP 4 249 978 A1

**Description**

**Field of the invention**

The present invention relates to an actuator assembly for positioning a moveable (e.g. optical) element in one of at least two stable positions with respect to a frame body along a movement axis, e.g. an optical axis of an optical element. Such an actuator assembly may be used to operate with a zoom lens in a mobile telephone. The moveable element is then a lens (group), e.g. a pop-up lens, and the frame body is then a basis or module frame, and e.g. two stable positions are provided along an optical axis of the lens.

**Background art**

A traditional actuation mechanism for a zoom lens is to use a rotational motor such as a DC motor, or a stepper motor and a transmission mechanism, e.g. as described in US patent publication US7,342,606. In this concept, at least one lens group is coupled to a driving source (such as a rotational motor) via transmission gears. By actuating the driving source, the lens group can be continuously moved along the optical axis. This design is complex and occupies considerably large space.

US patent publication US2020/0310224 describes a continuous zoom lens actuator using Shape Memory Alloy (SMA) wires. A lens group is actuated along the optical axis by a SMA-based actuator, consisting of a plurality of SMA wires. In order to keep the lens at one position, e.g. at the protruded position, power must be continuously dissipated in the SMA wires, which is not desirable for mobile applications, especially during a long use of the camera at the long focal length.

**Summary of the invention**

The present invention seeks to provide an improved actuator for keeping a body in one of two stable positions, e.g. as applied for zoom lens mechanisms in mobile applications allowing switching between two stable zoom lens positions.

Conventional actuation techniques known to date that possibly can be used for dual focal length camera modules include DC motors, stepper motors, or piezoelectric motors. The motor is usually coupled to the lens barrel via a transmission mechanism such as transmission gears or lever. Design of such an actuation system is rather complex, high cost and requires large space. Moreover, speed of actuation is often low (e.g. when using a rotational motor). For continuous zoom lens, Shape Memory Alloy (SMA) actuator is also a possible actuation mechanism, but in all published designs, the SMA actuator has to be continuously powered to keep the lens at at least one of the Focal Length (FL) positions

According to the present invention, an actuator assembly as defined above is provided, wherein the actuator assembly comprises a multi-stable positioning mechanism, and a plurality of shape-memory-alloy, SMA, wires. The multi-stable positioning mechanism is attached to the moveable element and the frame body and arranged to hold the mutual position of the moveable element and the frame body in one of the at least two stable positions along the movement axis. The plurality of SMA wires are being attached at their ends to the moveable element and the frame body, and arranged to apply a force between the moveable element and the frame body upon actuation.

Compared to prior art solutions, such as mentioned above, the present invention embodiments include a combination of the following components:

- The plurality of SMA wires, or SMA wire actuation mechanism. Using SMA actuation, a large force with relatively high stroke can be realized. Furthermore, SMA actuation is simple and takes much less space compared to e.g. a system using a stepper motor and gears.
- The multi- (e.g. bi-) stable positioning mechanism. With the multi-stable mechanism, a lens barrel can be kept at the stable positions without consuming power. Moreover, using the multi-stable positioning mechanism, the SMA actuator assembly does not need to move the lens barrel over the entire stroke, but only up to about the first half of the stroke. The second half of the stroke is finished by the bi-stable mechanism itself without consuming external power.
- An optional position sensing mechanism. This component helps to protect the SMA wires from degradation, and furthermore can provide acknowledgement of the completion of the actuation.

**Short description of drawings**

The present invention will be discussed in more detail below, with reference to the attached drawings, in which

Fig. 1A shows a perspective view of a first embodiments of an actuator assembly according to an embodiment of the present invention;

Fig. 1B shows a bottom view of the first embodiment shown in Fig. 1A;

Fig. 2A shows a side view of an exemplary embodiment of a multi-stable positioning mechanism;

Fig. 2B shows a side view of the multi-stable positioning mechanism shown in Fig. 2A in two stable positions;

Fig. 2C shows a side view perpendicular to Fig. 2A;

Fig. 3 shows a graph indicating force as function of a displacement in the first direction (Z) of the exemplary embodiment shown in Fig. 2A-C;

Fig. 4 shows a side view of a further exemplary embodiment of the actuator assembly according to the present invention;

Fig. 5A and 5B show two positions of a further embodiment of the actuator assembly according to the present invention;

Fig. 6A-D show four exemplary configuration embodiments of a control unit with eight SMA wires;

Fig. 7 shows a graph showing resistance change of an SMA wire as function of temperature;

Fig. 8A and 8B show schematic diagrams of a further embodiment of an actuator assembly in the two stable positions, and Fig. 8C shows a graph showing the sensor signal as function of the displacement;

Fig. 9A-D show four exemplary configurations of SMA wires in an actuator assembly;

Fig. 10 shows a side view of an even further exemplary embodiment of an actuator assembly according to the present invention;

Fig. 11A and 11B show side view of exemplary embodiments of an actuator assembly according to the present invention with a magnetism based multi-stable positioning mechanism;

Fig. 12A and B show an alternative embodiment of the actuator assembly with a magnetism based multi-stable positioning mechanism;

Fig. 13A and B show an embodiment of the actuator assembly with a magnetism based multi-stable positioning mechanism combined with a magnet based positioning sensor;

Fig. 14A and 14B show an exemplary embodiment of an actuator assembly with an optical positioning sensor; and

Fig. 15 shows a schematic diagram of an actuator assembly according to a further embodiment of the present invention with a control unit.

## Description of embodiments

Quality of smartphone cameras nowadays are catching up with bulky stand-alone cameras such as Digital Single-Lens-Reflect (DSLR) or full-frame mirrorless cameras thanks to continuous innovation and improvement in optics, miniaturization and image processing. Smartphones today have usually two, three or even more back cameras, sometimes up to four or five cameras. Instead of having to exchange heavy lenses like photographers have to do in DSLR cameras ten years ago, smartphone users today can just simply point and shoot. The phone combines automatically pictures taken by multiple camera modules integrated in the phone and post-process them to result in a final picture with the highest picture quality within just a fraction of a second. From a recent analysis, it has been shown that smartphones are better than or comparable to stand-alone cameras in most aspects, except zoom quality.

To have an "optical" zoom picture, the smartphone uses pictures from its discrete cameras with different focal lengths (FLs), e.g. of a primary camera (assuming $1\times$ zoom) and a telephoto camera (e.g. $2\times$ zoom), and blend them digitally to make a final picture of any zoom factor in between $1\times$ and $2\times$. Therefore optical zoom in smartphones today should correctly be called hybrid zoom, where truly optical zoom only happens at the fixed FLs of cameras available in the phone. The range of hybrid zoom is set by the camera of the longest FL.

In smartphone models earlier than 2019, telephoto camera lenses usually have FL of about 5-7mm (zoom ratio of ~$2\times$) which is simply limited by the thickness of the phone. Starting from 2019, periscope type of telephoto camera module began to appear in some flagship models. In these camera modules, light coming from the scene is folded 90 degrees by a prism and travels along the length direction of the phone to reach the image sensor. In this way, FL can largely be extended, up to 20-30mm or more, which is equivalent to a zoom factor of 5-7$\times$ or even longer.

Another method of increasing FL beyond phone's thickness is to protrude the outer lens when maximum zoom range is required, and after use, retract it back to the original FL. Some smartphone makers are pursuing this direction.

In the protruding zoom lens concept, the camera module has two discrete FLs: a short FL which is shorter than the thickness of the phone, and a long FL which is longer than the thickness of the phone. An actuator is used to quickly move the outer lens barrel between these two FL positions. Hybrid zoom technology is still used in this concept where pictures are created by digitally blending of images at different fixed FLs. In this invention disclosure, we call this type of camera module the dual focal length camera module, because it can toggle between two fixed focal lengths.

The present invention embodiments are formed by an actuator assembly 1 for positioning a moveable (e.g. optical) element 2 in one of at least two stable positions with respect to a frame body 3 along a movement axis Z. An exemplary embodiment is shown in the perspective view of Fig, 1A. The actuator assembly 1 comprises a multi-stable positioning mechanism 4, and a plurality of shape-memory-alloy, SMA, wires 5a, 5b. The multi-stable positioning mechanism 4 is attached to the moveable element 2 and the frame body 3 and arranged to hold the mutual position of the moveable element 2 and the frame body 3 in one of the at least two stable positions along the movement axis Z. The plurality of SMA wires 5a, 5b is attached to the moveable element 2 and the frame body 3, and arranged to apply a force between the moveable element 2 and the frame body 3 upon actuation.

In an exemplary implementation of the invention embodiments, a shape-memory-alloy (SMA) based actuator assembly 1 for a dual focal length camera module for mobile devices is provided. The actuator assembly 1 allows to quickly move the outer lens group (moveable element 2) of the camera module between two discrete positions along the movement/optical axis Z: the lower position where the lens group 2 retracts within the body of the mobile device (frame body 3), and the upper position where the lens group 2 extrudes from the body of the mobile device 3. By moving the outer lens group position from the lower to the upper position, the focal length, thus optical zoom ratio of the camera can be extended compared to fixed focal camera design. Note that in the below description, the movable element 2, frame body 3, multi-stable positioning mechanism 4 as defined in the appended claims may be indicated with some more particular, functional components terms (lens group 2, lens barrel 2, base 3, bi-stable positioning mechanism 4, etc.) with the same reference numerals.

In an exemplary embodiment, the actuator assembly 1 includes a plurality of SMA wires 5a, 5b connecting the lens barrel of the outer lens group 2 to the base (frame body 3). The SMA wires 5a, 5b may be arranged in an antagonistic configuration. When the SMA wires 5a, 5b are heated by a current, they contract and pull the lens group 2 to either direction. To select suitable force and stroke, the SMA wires 5a, 5b may be arranged at a non-zero angle with respect to the movement direction Z.

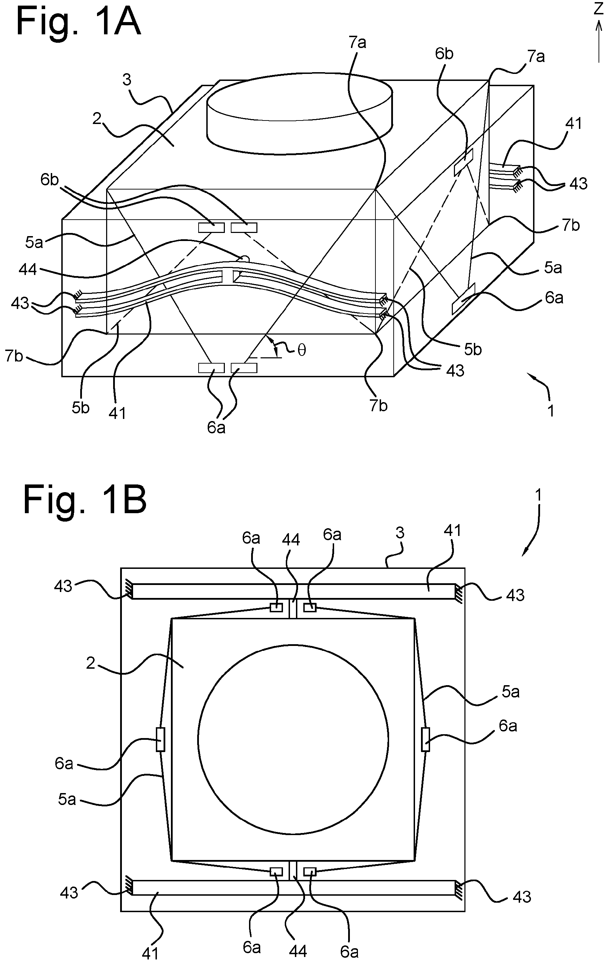

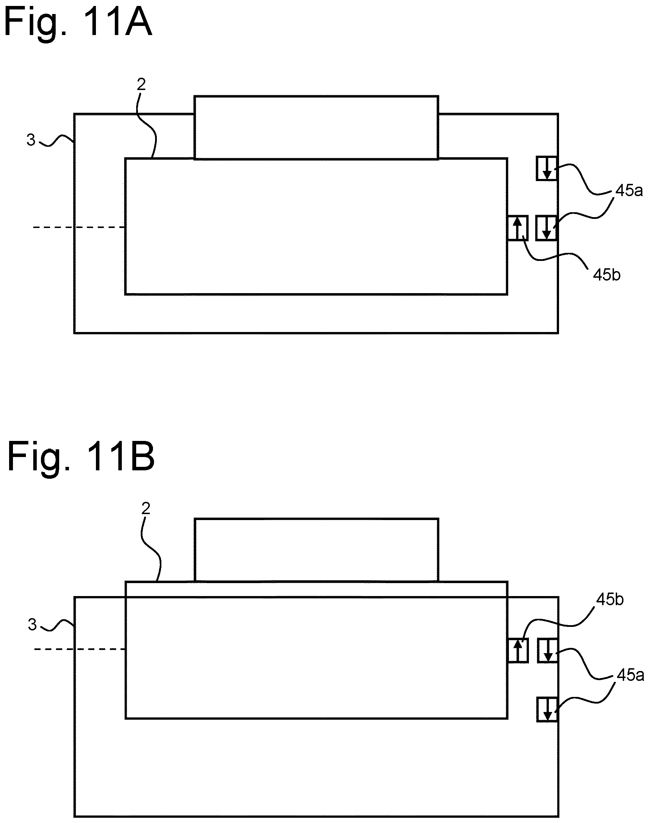

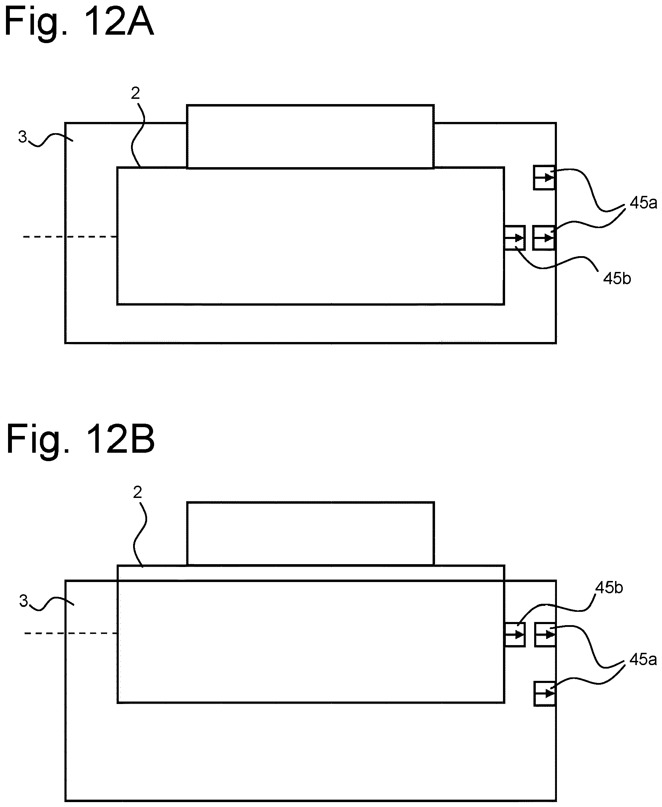

To keep the movable lens barrel 2 at either of the two fixed positions without dissipating power, the lens barrel 2 is coupled to a bi-stable mechanism (multi-stable positioning mechanism 4). The bi-stable mechanism may be based on a mechanical beam structure (see the exemplary embodiments described below with reference to Fig. 1A-B, 2A-C and 4), or based on a magnetic force mechanism (see the exemplary embodiments described below with reference to Fig. 11A-B and Fig. 12A-B). In a further embodiment, the camera module may have more than two focal length positions, which are supported by a multi-stable positioning mechanism 4.

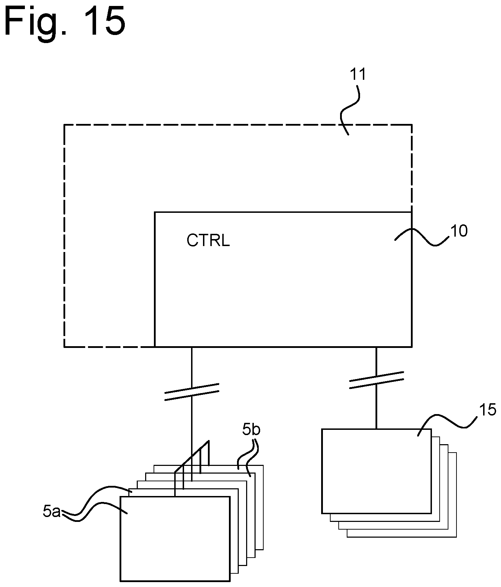

In an even further group of embodiments, the actuator assembly 1 further comprises a control unit 10 connected to the plurality of SMA wires 5a, 5b, as shown in the schematic diagram of Fig. 15. As shown in Fig. 15, the control unit 10 may be part of driver circuitry 11, which is e.g. part of a camera control unit or integrated circuit. Even multiple control units 10 may be present, each driving one group of SMA wires 5a, 5b. A camera module with an actuator assembly 1 according to the present invention embodiments this further includes a control unit 10, e.g. in the form of driver circuitry (e.g. an IC) for powering and controlling the SMA wires 5a, 5b. The driver circuitry 10 generates either a DC or a modulated electrical current for the SMA actuator assembly 1, e.g. controlled by a digital controller, such as an integrated micro-controller within a camera driver IC.

In further embodiments, the control unit 10 is arranged to monitor voltage and/or current levels to each of the plurality of SMA wires 5a, 5b. This allows one or more of current, voltage, and/or resistance monitoring of each of the SMA wires 5a, 5b for various function which will be discussed in detail further below.

The actuator assembly 1 according to the present invention embodiments may further comprise position sensors or more generic, a position sensing system to detect position of the movable lens barrel. In addition, or alternatively, the actuator assembly 1 further comprises position sensors 15 connected to the control unit 10. The position sensors 15 comprise magnetic sensor elements 15a-c and/or optical sensor elements 15d-f in a further embodiment.

Position information obtained from the position sensors 15 is e.g. used to prevent damage or degradation of the SMA wires 5a, 5b if movement is blocked by accident, and may also be used for control of the actuator assembly 1, or for other operations such as autofocus control or image processing. The position sensing system/ position sensors 15 may be based on a magnetic principle, or an optical principle. When the position sensing system is magnetic based, it may be combined with the magnetic bi-stable positioning mechanism 4 (see further details below), wherein one or more of the components of the position sensing system 15 may also be used as components of the magnetic bi-stable positioning mechanism 4. When the position sensing system is optical based, it may be combined with the magnetic bi-stable positioning mechanism 4 (see further details below).

Besides the application of the present invention actuator assembly 1 in a dual focal length camera module, the present invention embodiments can also be used in any application where a dual-stage or multiple-stage actuation is needed. Some examples include: pop-up mechanism for selfie camera in smartphones, pop-up flash in cameras, lens cover actuation in cameras, etc.

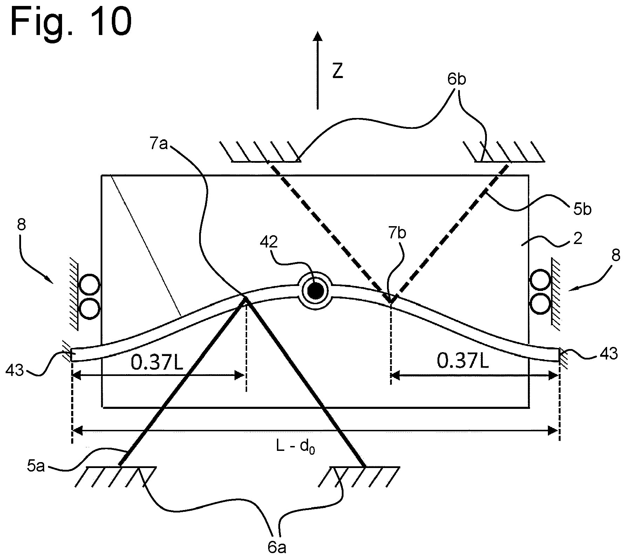

In Fig, 1A a perspective view is shown of an exemplary actuator assembly 1 useable in a camera module, and Fig. 1B shows a bottom view of the actuator assembly. A housing is provided, which is connected to a frame body 3. The frame body 3 may comprise various optical, mechanical and electronic components, such as lens elements, autofocus actuators, image sensor, etc. but these are not relevant for the present invention embodiments and therefore not shown in these drawings. Further, the frame body 3 holds a movable element 2 (optical lens barrel). This movable lens barrel 2 is e.g. a variator lens group that is responsible for changing the focal length of the camera. The movable lens barrel 2 can only move along the optical axis Z of the camera, and coupled to the frame body 3, e.g. via a sliding mechanism, a ball-bearing, or a set of springs, which are not shown in this drawing (see embodiment described with reference to Fig. 10 below). In a normal operation mode, the movable lens barrel 2 rests at its lower position, where the height of the module is smaller than the thickness of the phone. When operated in the zoom mode, the movable lens barrel 2 is displaced to the upper position, where the total height of the module is larger than the phone thickness (extruded position).

In further embodiments of the present invention, the plurality of SMA wires 5a, 5b each comprise material which is arranged to reduce the SMA wire length by heating, e.g. current based heating. This allows easy and economic implementation to control the force applied between the moveable element 2 and the frame body 3.

Actuation principle according to the present invention embodiments is based on shape-memory-alloy wires, SMA. SMA is a special material that can be deformed at a low temperature, where the material is in a crystallographic structure with a dominant contribution of Martensite phase, but can return to its predefined shape when heated up to an elevated temperature, where the material is transformed to a structure with predominantly Austenite phase. When made in shape of wire, and properly set at high temperature, SMA wire 5a, 5b can contract in length up to 5-6% when heated up to about 90 - 100 degrees Celsius, compared to its length at room temperature. Note that SMA wires 5a, 5b can be treated to have a wide variety of transformation temperatures. In the preferred embodiment it is suggested to have SMA wires 5a, 5b that transform to the high temperature state at about 90-100 degrees Celsius. Typically they transform back at about 60-70 degrees Celsius. Based on this special property, SMA wire 5a, 5b is often used for actuators in general. Heating is usually done by applying an electrical current, and cooling relies on natural cooling (convection and conduction). An advantage of an SMA actuator assembly 1 is simple and compact design. Besides, an SMA wire 5a, 5b can deliver high force and a relatively large stroke, as compared to electromagnetic actuators.

Movement of the movable lens barrel 2 is done by a plurality of SMA wires 5a, 5b. The plurality of SMA wires 5a, 5b connect the lens barrel 2 to the frame body 3, and, in the exemplary embodiment shown in Fig. 1A-B, are split into two sets 5a, 5b of antagonistic wires, responsible for pulling upward and downward. The SMA wires 5a, 5b are arranged at an angle with respect to the base plane. In an exemplary embodiment as depicted in Fig. 1A, there are two sets of antagonistic SMA wires 5a, 5b. Each set has four SMA wires. For instance, one down-wire 5a begins at an anchor 6a on the frame body 3, at the right-hand side of the module, hooks over the front-up-right corner 7a of the lens barrel 2, and finally ends up at another anchor 6a on the frame body 3, at the front side. In general wording, the plurality of SMA wires 5a, 5b are attached to the frame body 3 by anchor elements 6a, 6b and to the moveable element 2 at connection points 7a, 7b.

The SMA wire 5a makes an angle $\theta$ with respect to the base plane of the frame body 3 as indicated. Three other SMA down-wires 5a are arranged in the similar way at the other three corners (connection points) 7a of the lens barrel 2. Similarly, four up-wires 5b are anchored to the frame body 3 at the top part, and hook over the lower corners (connection points) 7b of the lens barrel 2. An advantage of hooking the SMA wires 5a, 5b over the corners 7a, 7b (as in the exemplary embodiment shown in Fig. 1A) is that by selecting the position of the anchors 6a, 6b along the module edges of the frame body 3, a wide range of angle $\theta$ can be selected for force/stroke optimization.

In generic wording, in a further group of embodiments, the plurality of SMA wires 5a, 5b comprises a first set of SMA wires 5a arranged to apply a force to the moveable element 2 having a force component in a first direction parallel to the movement axis Z, and a second set of SMA wires 5b arranged to apply a force to the moveable element 2 having a force component in a second direction parallel to the movement axis Z, opposite to the first direction.

Electrically, the SMA wires 5a, 5b can be powered separately, or can be powered in series or parallel. For instance, as shown in Fig. 1A, every two adjacent up or down SMA wires 5a, 5b are connected in series at one of their anchors 6a, 6b. Therefore, in this configuration, to actuate every up- or down-wire set 5a, 5b, two electrical power sources are provided. When the up- or down-wires 5a, 5b are powered with an electrical current, they will exert a force at an angle of $\theta$ on the lens barrel. Due to the symmetry of the wire configuration, the combined force will be in the vertical direction Z, which pulls the lens barrel 2 upward or downward, respectively.

The force component of each wire segment on the z direction is $F_z = F_w \sin \theta$, where $F_w$ is the tensile force that the SMA wire 5a, 5b can exert along its length. Further, $F_w = \sigma.s$, where $\sigma$ is the tensile stress in the SMA wire 5a, 5b during actuation, and s is the cross-section area of the SMA wire 5a, 5b and the dot. means multiplication. For a commonly used SMA material (e.g. NiTi), $\sigma$ is in the order of 100-300 MPa during a normal actuation action. As an example, when a SMA wire 5a, 5b of diameter of 25$\mu$m is used, and at $\sigma$ = 300 MPa, $F_w$ is 0.15 N per SMA wire 5a, 5b.

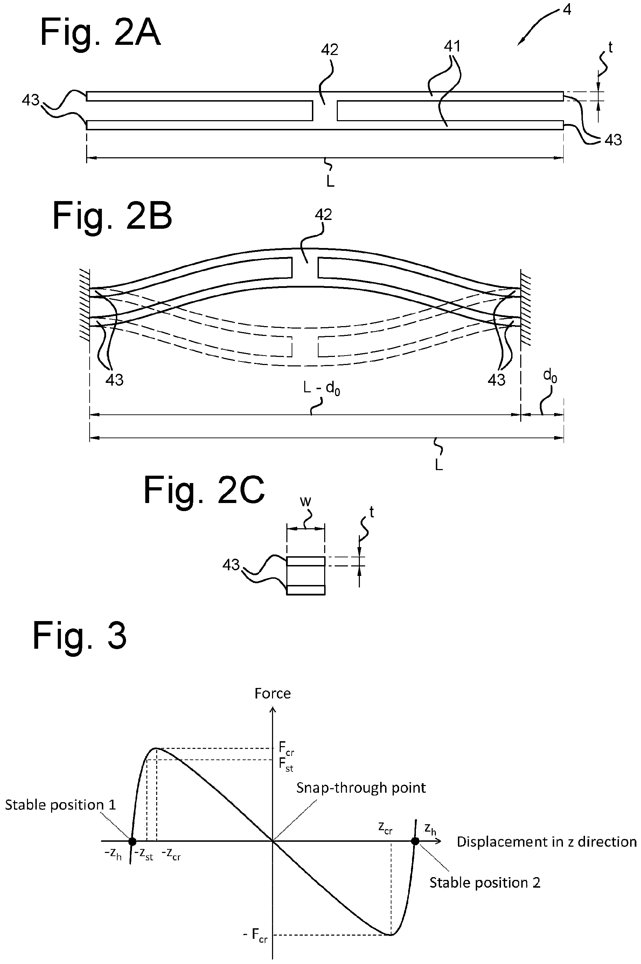

An important feature of the present invention embodiments is the use of the SMA wire 5a, 5b based actuation in combination with the multi- (bi-)stable positioning mechanism 4 to keep the lens barrel 2 fixed at either position without applying power. In Fig. 1A, a bi-stable positioning mechanism 4 is shown having two sets of double bi-stable beams 41 at two opposite sides of the lens barrel 2. Fig. 2A-C gives a detailed view from various sides of the double bi-stable beam 41. The double bi-stable beam 41 has two parallel beams connected to each other at the middle 42 and at the ends 43. Further, the two ends 43 of the composite beam are anchored to the frame body 3 of the camera module, while the middle point 42 is connected to the middle point of the lens barrel 2, as shown in the top view of the actuator assembly 1 in Fig. 1B. The double bi-stable beams 41 can be made of metal or plastic. The connection 44 between the middle point 42 of the composite beam 41 with the lens barrel 2 may be a stud, a pin or a screw, made of metal or plastic. Alternatively the connection pieces may be made with the beams 41 in one piece (e.g. by plastic molding or 3D printing). The connection pieces 44 are fixed to the lens barrel 2 by insertion or screwing in a hole or threaded hole, and/or by gluing, In another option, the double bi-stable beams 41, the connection pieces 44, and the lens barrel 2 can be made in one piece by plastic molding or 3D printing. Upon fabrication, the beams 41 are straight and stress-free with a length L, but during assembly, the beams are pre-compressed axially and placed between the sides of the frame body 3 (the length is thus reduced by do, see Fig. 2B). In this way, the beams 41 are buckled either upward or downward, giving two well defined bi-stable positions. The distance between the ends 43 after assembly is defined as L-do, as shown in Fig. 2B.

Thus, in a further embodiment of the present invention actuator assembly 1, the multi-stable position mechanism 4 comprises one or more bi-stable beams 41, each of the one or more bi-stable beams 41 having a middle part 42 connected to one of the moveable element 2 and the body frame 3, and outer end parts 43 connected to the other one of the moveable element 2 and the body frame 3. The bi-stable beams 41 may be double beam variants as described above, or single beam variants, as will be described below.

The one or more bi-stable beams 41 each comprise at least two parallel beams connected to each other in the middle, with outer end parts 43 of the at least two parallel beams connected to the frame body 3 in a further embodiment. Furthermore, in an even further embodiment, the one or more bi-stable beams 41 are in a pre-compressed state, i.e. the length of a bi-stable beam 41 is longer than a local width of the frame body 3. According to Fig.2B, the bi-stable beams 41 are in a curved shape when the bi-stable beams 41 are in the frame body 3. Before being assembled in the frame body 3, the bi-stable beams 41 are in symmetrical shape and specifically they are axisymmetric.

Fig. 3 shows a typical force - displacement curve of such a bi-stable beam structure 41. Due to the symmetrical design of the beams 41 and the way they are assembled, the curve is symmetrical around the origin. There are two stable positions 1 and 2, at displacement $-z_h$ and $+z_h$. The stroke of this bi-stable beam structure 41, that is the distance between stable positions 1 and 2, is therefore $2z_h$. Assume that in the beginning, the double bi-stable beam 41 is at the upper position, or stable position 1. To actuate the beam downward, first of all, a down force needs to be applied at the midpoint 42 of the beam 41. The force needs to increase quickly to a maximum at $F_{cr}$, when the midpoint 42 of the beam 41 moves from $-z_h$ to $-z_{cr}$ (critical displacement). Critical displacement, $Z_{cr}$, is the position of the midpoint 42 where the applied force is maximum ($F_{cr}$), referring to the force-displacement curve in Fig.3. After this point, the force linearly decreases while the midpoint 42 of the beam 41 still moves downward. This part therefore has a negative stiffness. Just after passing the snap-through point at the origin of this graph where the force becomes zero, the beam structure 41 snaps by itself quickly to the second stable position without any external power. Due to symmetry, the snapping action from position 2 and position 1 happens in exactly the same way, but in reversed direction.

The use of the double bi-stable beam 41 structure (compared to a single beam structure) is to constrain the snapping action only in the even mode that means, the shape of the beam 41 during buckling and snapping remains always an even function. As a consequence, the middle point 42 of the double beam 41 structure will only translate up and down without rotation.

The use of such a bi-stable beam 41 structure has several advantages:

- The two positions of the lens barrel 2 can be well defined by the bi-stable positions.
- The SMA actuator 1 only has to work up to half of the stroke, after that the structure will snap by itself without consuming external power.
- The lens barrel 2 can be kept at either position without consuming power.

As will be elaborated in the next section, even the stroke that the SMA actuator assembly 1 has to pull is only half of the total required stroke, the peak force needs to be higher than if no bi-stable beam 41 structure would be used. However, this working condition can be satisfied by the SMA wires 5a, 5b, since this type of SMA wires 5a, 5b can deliver pretty high force, but at limited stroke.

The force-displacement curve as shown in Fig. 3 is characterized by three main parameters: $F_{cr}$, $z_{cr}$, and $z_h$. An analytical model for the pre-compressed, single bi-stable beam 41 has been developed by *W. Yan, Y. Yu, A. Mehta, "Analytical modeling for rapid design of bi-stable buckled beams", Theoretical & Applied Mechanics Letters 9 (2019) 264-272*. The simplified formulas for the parameters $F_{cr}$, $z_{cr}$, and $z_h$ for a double bi-stable beam 41 are given by:

$$F_{cr} = \frac{2EI\sqrt{d_0 L}}{L^3} F_0(\sigma) \ (1)$$

with:

$$F_0(\sigma) = 50588\,\sigma^4 - 69285\,\sigma^3 + 36606\,\sigma^2 - 8894.5\,\sigma + 914.9$$

$$z_{cr} = 2\sqrt{d_0 L}\; z_0(\sigma)\ (2)$$

with:

$$z_0(\sigma) = -7.155\,\sigma^4 + 2{:}872\,\sigma^3 + 4.339\,\sigma^2 - 1{:}538\,\sigma + 0.0832$$

$$z_h = \frac{2\sqrt{d_0 L}}{\pi}\ (3)$$

where $F_{cr}$ is the critical force (in N) - factor 2 in the formula of $F_{cr}$ comes from the fact that there are two beams (double beam) connected in parallel, $z_{cr}$ is the displacement at $F_{cr}$ (in m), $z_h$ is the half-stroke (in m), E is Young's modulus of beam material (in Pa), I is the second moment of area of each beam, $I = w.t^3/12$ (in $m^4$), $\sigma$ is the ratio of the shortest distance from the loading position to either of the two ends 43 of the beam, to the distance between the two ends 43, L. The two dimensionless factors Fo = 120.28, and zo = 0.31, calculated for the case when the force is applied in the z direction at the middle point of the beam (thus $\sigma$ = 0.5). Furthermore, see definitions for w, t, L and do in Fig. 2A-2C.

As an example, it is assumed the bi-stable beams 41 are made of polyoxymethylene (molded plastic) with Young's modulus of 2.57 GPa, beam dimensions are w=0.617 mm, t=0.32 mm, L=22 mm, and do=0.351 mm. According to the Eqs. (1-3) above, the critical force is $F_{cr}$ = 0.272 N, the critical displacement is $z_{cr}$ = 1.727 mm, and the half-stroke is $z_h$ = 1.769 mm. Since there are two double bi-stable beams 41 coupled to the lens barrel 2, the total critical force of the combined bi-stable beams 41 is $F_{cr\_tot}$ = 2*$F_{cr}$ = 0.544 N.

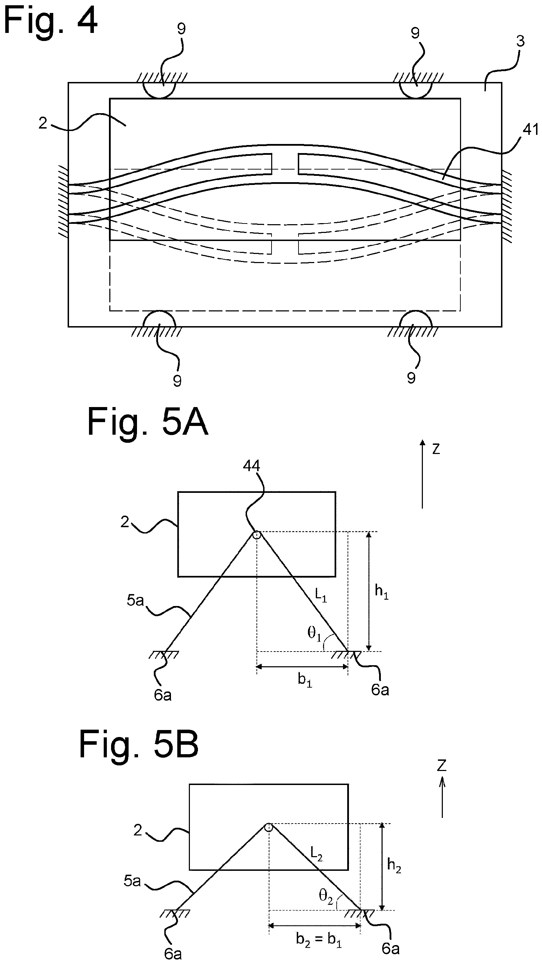

As an option, there may be two sets of stop elements 9 or stoppers (upper set and lower set of stoppers) placed at $\pm z_h$ or in between $\pm z_h$ and $\pm z_{cr}$, see the exemplary embodiment shown in Fig. 4. The stoppers are attached to the two opposite sides of the frame body 3. For example, two stoppers are attached to upper side of the frame body 3 and the other two stoppers are attached to the lower side of the frame body 3. In one embodiment, the stoppers 9 can be placed at the two stable positions $\pm z_h$. In another embodiment, the stoppers 9 can be placed between the stable position $+z_h$ and its relevant critical displacement $+z_{cr}$ and between the stable position $-z_h$ and its relevant critical displacement $-z_{cr}$. If the stoppers 9 are placed at $\pm z_h$, they help damp oscillation when the lens barrel 2 settles at the bi-stable positions. If the stoppers 9 are placed slightly inward, that is in between $\pm z_h$ and $\pm z_{cr}$, besides damping oscillation, they create initial stress for the SMA wires 5a, 5b. As will be elaborated below, SMA material requires a certain level of initial stress in order to provide large strain. In some specific designs of the camera module, non-zero stress in the beginning (before the SMA wire 5a, 5b is heated) may be required. Thus, in a further embodiment of the present invention actuator assembly 1, stop elements 9 (or stoppers) are attached to the frame body 3 and/or the moveable element 2. In one embodiment, the stoppers 9 may be attached to the frame body 3. In one embodiment, the stoppers may be attached to the moveable element 2. When the stoppers 9 are attached to the moveable element 2, the stoppers 9 move with the moveable element 2 and once the stoppers 9 are in contact with the frame body 3, the moveable element 2 is in one stable position. In one embodiment, the stoppers 9 may be attached to both the frame body 3 and the moveable element 2. When the stoppers 9 are attached to both the frame body 3 and the moveable element 2, a first group of two stoppers 9 may be attached to the frame body 3, a second group of two stoppers 9 may be attached to the moveable element 2, and the first group of two stoppers 9 and the second group of two stoppers 9 are in contact when the moveable element 2 moves to the end stop. In all embodiments above, the stoppers 9 will help damp the oscillation and/or make initial stress in SMA wires 5a, 5b. For the above embodiment, two stoppers 9 are an example and one stopper 9 or more stoppers 9 can be applied to the above embodiments.

In an embodiment, in total four stoppers 9 may be provided: two of them are at the upper part and two of them are at the lower part. The two stoppers 9 at the upper part are placed at two opposite sides of the moveable element 2. That is to say, they are across the diameter of the moveable element 2. The same is for the two lower stoppers 9. In general, there may be multiple upper and lower stoppers 9, distributed equally around the periphery of the moveable element 2. Additionally, the stop elements 9 may be made of a flexible material in a further embodiment.

For instance, if the stoppers 9 are placed at $z_{st}$ = $\pm 1.750$ mm (at a distance of 0.023 mm from $z_{cr}$), the initial force that can be used to pre-stress SMA wires 5a, 5b is (maximum) $F_{st}$ = 0.124 N, and thus, for two double bi-stable beams 41, this force becomes $F_{st\_tot}$ = 2$F_{st}$ = 0.248 N. The total stroke of the lens barrel 2 (that should be equal to the desired distance between two focal length positions) is defined by the two stoppers 9, which is $2z_{st}$ = 3.5 mm. This example of the bi-stable beam 41 will be used below where the SMA wire 5a, 5b based actuator assembly is further elaborated.

In the following paragraphs, more details are described in relation to actuation using SMA wires 5a, 5b, and further embodiments of an actuator assembly configuration are described. The SMA wires 5a, 5b are known to exhibit a large recoverable strain effect. This strain effect is caused by a reversible crystallographic structure change. There are two types of SMA wires 5a, 5b: (a) thermally-responsive / thermally activated and (b) (ferro)magnetic, in an advantageous embodiment the first type (a) is used. It should be noted that the name of the type suggests that the crystallographic structure change is exclusively a result of temperature changes, but the structure change can also be driven or impacted by stress effects. In this description the indication SMA (in combination with wire and further terms) corresponds to material of type (a). Note that SMA wire 5a, 5b material is always a metallic alloy (often, but not exclusively Nickel Titanium).

In an advantageous embodiment a current (electrical power) is applied to the SMA wire 5a, 5b to heat the SMA wire 5a, 5b (this principle is also called resistive heating or Joule heating), and natural convection and conduction is used as cooling. Forces (both external as well as forces from other components of the invention) also have impact on the crystallographic structure. A simplified schematic illustration of part of the actuation concept is depicted in Fig. 5A and 5B, where only a single SMA wire 5a is depicted. In Fig. 5A the state is shown where the SMA wire 5a has a temperature close to the relatively low environment temperature (State 1), in this case the crystallographic structure of the material is low on Austenite phase and relatively high on detwinned Martensite (which causes the wire to be relatively long). In Fig. 5B (State 2) the state is shown where the SMA wire 5a is heated and the crystallographic structure is mainly in the Austenite phase (which causes the wire to be relatively short).

In Fig. 5A and 5B the SMA wire 5a is hooked at the center 44 of the movable lens barrel 2, where there are two mirrored wire segments (due to symmetric anchoring 6a on either side). This simplifies design and analysis, but one could inter alia also choose to have the hook point at a different position on the movable lens barrel 2, or anchoring on the movable lens barrel 2 and hooking on the frame body 3, and/or connecting the SMA wire 5a in an asymmetric configuration, etc. It should be noted that State 2 is relatively well defined, where the crystallographic structure of the material is roughly the same (almost fully in Austenite phase) irrespective of the history of the wire. This is in contrast to State 1 which can contain significant portions of twinned Martensite and R-phase in its crystallographic structure. The latter is important as the total transformation strain, and thereby, the stroke of the SMA wire 5a is affected. In order to have relatively high transformation strain it is wise to assure stresses exceed -100 MPa before leaving State 1 for the used material. Further, it is recommended to keep strain below 3 % and stress below 300 MPa, to ensure good fatigue properties (e.g., 600k+ actuation cycles can be guaranteed). Depending on the wire manufacturing process and training, this quantification is subject to change. The values stated here are believed to be conservative and have been empirically determined.

As more elaborately discussed above, an advantageous embodiment has four SMA wires 5b pulling up (referred to as the up-wires) and four SMA wires 5a pulling down (the down-wires). Due to symmetry in the design, each individual wire 5a, 5b has similar stress in amplitude and strain cycles. Similar here means they are not exactly the same, but very close in most of cases. For example, if the movable element 2 works as normal (no blockage), stress in the SMA wires 5a, 5b are very close. To be precise, if the movable element 2 is required to operate at a very slow rate, the stress values in the SMA wires 5a, 5b are the same, since at all times, forces from the SMA wires 5a, 5b are in equilibrium. Only when the movable element 2 is required to operate in fast movement, at the transient, stress may be briefly different, but then the moveable element 2 will move to the side of higher stress, and finally it will equalize the force/stress difference. Note that Fig. 5A and 5B can be considered a schematical illustration of an arbitrary down-wire 5a in the embodiments, where the dimensions, for an example, are; $b_1$ = 10 mm, $h_1$ = 2.6 mm and $L_1$ = 20.665 mm. The wires have a diameter of $D$ = 50 $\mu$m, and thereby a cross-section area of A = 1.9635 · $10^{-9}$ m². This embodiment of the SMA actuator configuration of the actuator assembly 1 will be used in combination with the exemplary double bi-stable beam 41 design described above with reference to Fig 1A and 1B.

In order to have a relatively large potential stroke, it is aimed to have a minimum stress of $\sigma$ = 100 MPa in State 1. This stress is realized by an initial force applied in z direction of $F_{init}$ = 0.050 N. Furthermore, to ensure long lifetime, the maximum stress on the SMA wires 5a, 5b should be lower than a = 300 MPa, meaning that there is also a maximum force in z direction in State 1: $F_{1,max}$ = 0.148 N. Last, in the embodiment it is aimed to have a total strain effect that is limited to 3 %. As a consequence, the actuator can go from State 1 to a state of 3 % strain, which will be referred to as State 3 (which is a state in between State 1 and State 2). As the anchor points 6a of the SMA wire 5a are fixed ($b_1$ = $b_3$), the following is valid in State 3: $L_3 \cong$ 20.045 mm, $h_3$ = 0.671 mm. The stroke between State 1 and State 3 is equal to $h_1 - h_3$ = 1.929 mm, where only 1.75 mm is needed to snap the pre-compressed bi-stable mechanism.

To generalize, for a SMA wire 5a, 5b with a total maximal (Green-Lagrange) strain of $\varepsilon_{max}$ the minimal length of the SMA wire 5a, 5b is equal to:

$$L_{min} = \frac{L_1}{\sqrt{2\epsilon_{max} + 1}} . (4)$$

Consequently, the maximal stroke of the SMA wire 5a, 5b is equal to:

$$\Delta h_{max} = h_1 - \sqrt{\left(\frac{L_1}{\sqrt{2\epsilon_{max} + 1}}\right)^2 - b_1^2} . (5)$$

The force that is exerted by an individual SMA wire 5a, 5b is equal to:

$$F_{SMA} = \sigma A \sin(\tan^{-1}(h/b_1)), (6)$$

where the maximum force can be exerted at $h = h_1$.

It is noted that the pre-compressed bi-stable beam mechanism 41 in the embodiment shown in Fig. 4 pushes against the stopper 9 after snapping. Considering there are four SMA wires 5a, 5b pulling to a single side, the force exerted by the mechanism should be minimum of $F_{stop} \geq 4F_{init} + F_{frict} = 0.244$ N, where a maximum friction force of $F_{frict}$ = 0.044 N is assumed. This friction force comes from the sliding mechanism between the lens barrel 2 and the frame body 3. By having a stopper 9 at 0.023 mm (which equals $z_{st} - z_{cr}$) away from the position of the peak force ($z_h$), the pre-compressed bi-stable beam mechanism 41 pushes with a force of $F_{st\_tot}$ = 0.248 N. Further the bi-stable beam mechanism 41 has a peak force of $F_{cr\_tot}$ = 0.544 N (see above). In a case where the SMA wires 5a, 5b have to encounter the peak force combined with the maximum friction the force exerted by the SMA wires 5a, 5b needs to be $F_{SMA} = F_{frict}$ + $F_{cr\_tot}$ = 0.588 N. This force corresponds with a stress in the individual SMA wires 5a, 5b of $\sigma$ = 300 MPa. Following this reasoning it can be concluded that the SMA wires 5a, 5b are able to robustly snap the pre-compressed bi-stable beam 41 over the required stroke for 600k+ cycles.

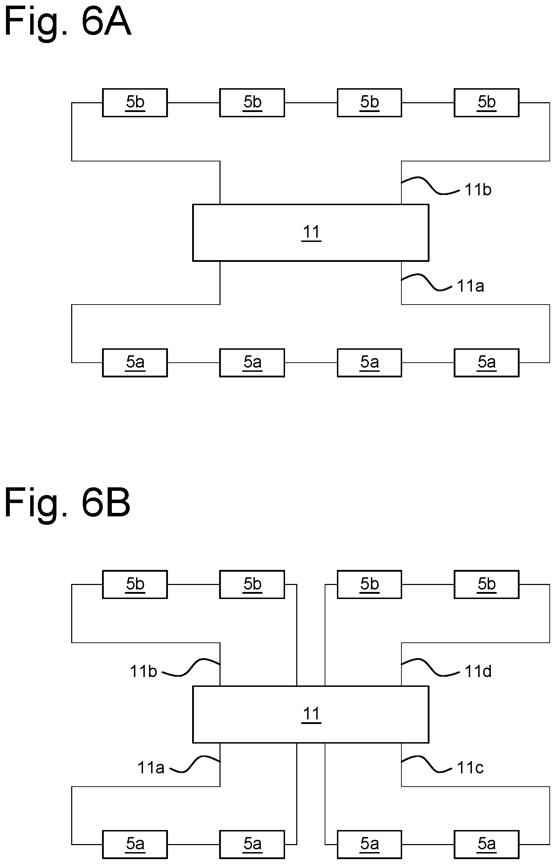

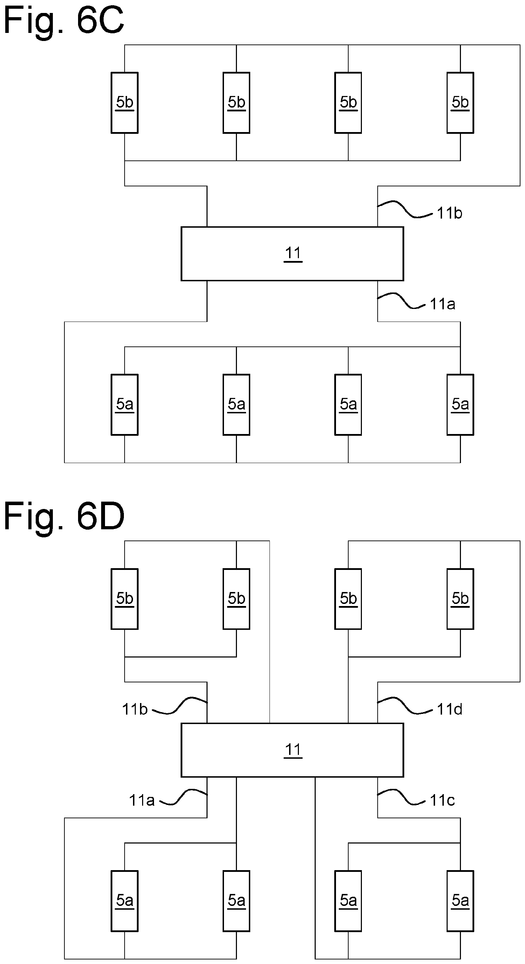

A last topic of importance are the electrical properties of the SMA wires 5a, 5b, as they directly affect the required voltage and current. The application of the invention embodiments is inter alia smartphones, which typically have a nominal battery voltage of 3 - 4 V. If a higher voltage is required a boost converter is needed which significantly increases costs and dimensions of a driver chip. From experimental analysis it is observed that the resistivity for the SMA wires 5a, 5b used is equal to $R_w$ and $372 \left[\frac{\Omega}{m}\right] \cdot L_1[m] \geq R_w \geq 425 \left[\frac{\Omega}{m}\right] \cdot L_1[m]$ , which for the specific wire length is equal to 7.69 Ω $\geq R_w \geq$ 8.78 Ω per wire. When stress in the SMA wire 5a, 5b increases the current required to obtain significant strain of the SMA wire 5a, 5b increases, where for the maximum stress of 300 MPa a current of I = 87.12 mA is required (when currents are higher, the actuator will be able to move quicker). Note that it is possible to connect all or some single sided SMA wires 5a, 5b together and actuate with a single driver channel. By connecting SMA wires 5a, 5b in series the voltage increases and the current stays the same, by connecting them in parallel voltage stays the same but current increases. Fig. 6A-6D show a number of possible examples of connection schemes. In theory only two channels are needed (one for all up-wires 5b and one for all down-wires 5a), as shown in Fig. 6A, where all up- (down-) SMA wires 5a, 5b are connected in series or Fig. 6C, where all up- (down-) SMA wires 5a, 5b are connected in parallel. In an advantageous embodiment it is chosen to drive with four channels, where the first two channels each drive two up-SMA-wires 5b in series and the last two channels each drive two down-SMA-wires 5a in series (Fig. 6B). Another way is to drive also with four channels similar to Fig. 6B, but in each pair of SMA wires 5a, 5b, the SMA wires 5a, 5b are connected in parallel (Fig. 6D). In the worst-case the required voltage is $U \geq IR = 2IR_w$ = 1.53 V, so there is no need to have a boost converter when driving the embodiment in a typical smartphone device.

By changing the SMA wire 5a, 5b angle θ (see definition in Fig. 1A or Fig. 5A-5B), proper force and stroke can be selected. By a simple trigonometric calculation, the pulling force and stroke in the z direction per wire segment can be found as follow:

$$dh = b \tan\theta - \sqrt{\frac{b^2(1-s)^2}{cos^2\theta} - b^2} ; (7)$$

where dh is the stroke in z direction and s is the strain of the SMA wire; $\theta$ and b are the same as $\theta_1$ and bi defined in Fig. 5A-5B.

$$F_z = F_{tensile}\, sin\, \theta \; ; (8)$$

where $F_z$ is the pulling force in the z direction per wire segment, $F_{tensile}$ is the tensile force along the wire, created by the stress of the wire

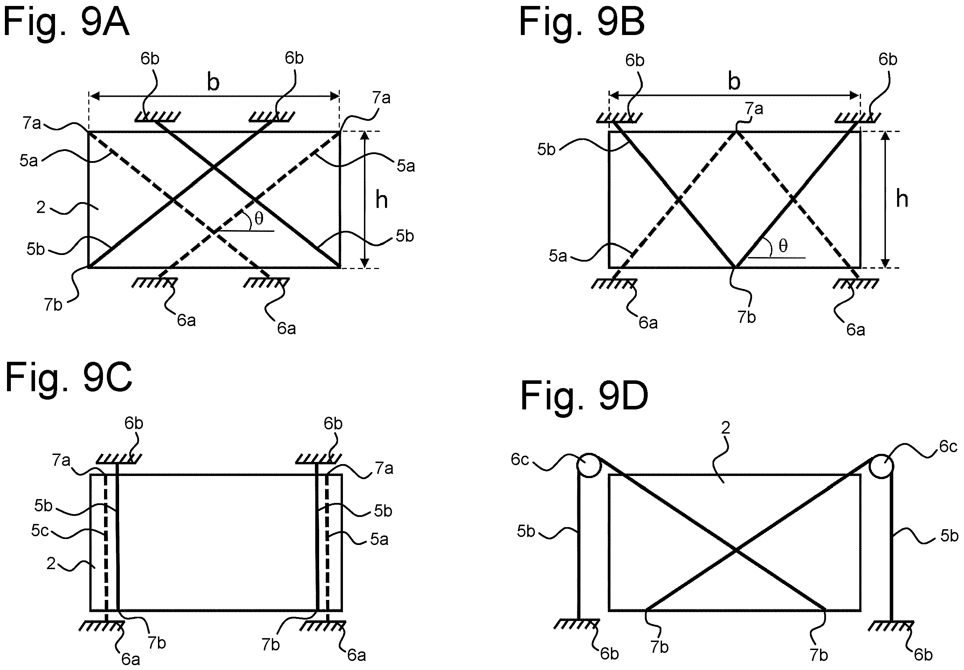

As can be seen from the above formulas, the smaller the angle, the larger stroke the SMA wires 5a, 5b can produce, but at the price of lower pulling force. There are several alternatives of SMA wire 5a, 5b configurations which are shown in the schematic drawings of Fig. 9A-9D.

Fig. 9A shows an alternative design where the anchor points 6a, 6b are located at an off-center edge position different from a middle edge position (i.e. not at the middle of an edge as in the exemplary embodiment shown in Fig. 1A), which results in a smaller $\theta$. Figs. 9B-9D show some further examples of possible SMA wire 5a, 5b configurations. For instance, in Fig. 9B, the anchors 6a, 6b may be at the corners and the hook points (connection points) 7a, 7b may be at the middle of the lens barrel 2 edges. In Fig. 9C, the angle $\theta$ is 90 degrees, thus the actuation force is maximum, but the stroke is minimum. In Fig. 9D, longer SMA wires 5a, 5b are used to increase the stroke. To accommodate the excessive length, each SMA wire 5a, 5b is folded around a hook 6c (or a pulley). Note that, in Fig. 9D, only up-wires 5b are sketched for simplicity. It should be understood that there is another set of down-wires 5a connected in the opposite direction.

In the implementation of the present invention actuator assembly in a dual focal length camera module, there is a risk that the lens barrel 2 is blocked by e.g. phone-user's finger, while the SMA actuator assembly 1 tries to pull it. In this case, the module needs to be designed such that no permanent damage to the SMA wires 5a, 5b occurs.

According to experimental evidence, when the SMA wire 5a, 5b, suitable for use in this application, is heated to -100 degrees Celsius (at which the material is transformed from Martensite phase to Austenite phase), while its length is constrained (to mimic the blockage), the wire can survive thousands of times of such heating cycles. However, total transformation strain of the wire is slightly degraded (-0.4%). This amount of change is considered to be accepted for this application, while no precise movement is required. However, the change, even small, of the material can still be avoided by detection of the blockage and stop heating before high temperature is reached. Detection of the blockage can be done using one of the exemplary embodiments below.

As mentioned above with reference to Fig. 15, in further embodiments, the control unit 10 is arranged to monitor voltage and/or current levels to each of the plurality of SMA wires 5a, 5b. This allows one or more of current, voltage, and/or resistance monitoring of each of the SMA wires 5a, 5b for example for detection of blocking.

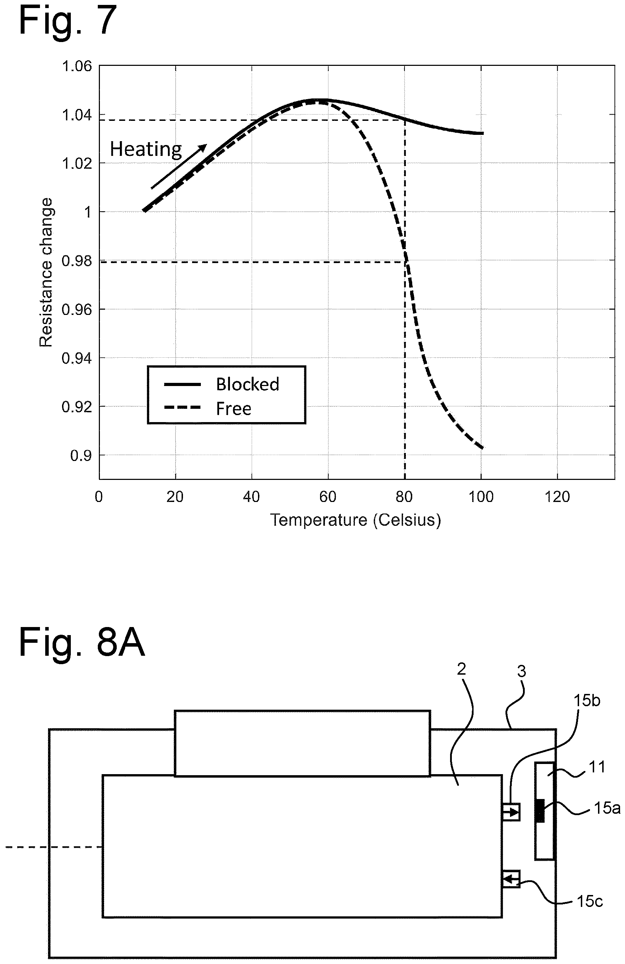

During driving the SMA wires 5a, 5b, the control unit 10 e.g. measures voltage and current of the heating current, by which resistance of the SMA wires 5a, 5b can be calculated and monitored. In Fig. 7, the vertical axis "Resistance change" is dimensionless, because it is relative resistance change with respect to resistance at room temperature (when there is no current). Condition for stopping the actuation can be defined based on relative resistance change, for instance, when relative resistance change differs from a known free condition of more than a threshold ratio, for example, 5%, or more preferably more than 2%. Fig. 7 shows a graph of a typical measurement of SMA wire 5a, 5b resistance during heating in two cases: length constrained (movement is blocked), and free movement under constant stress. Normally, when the wire is not blocked (free), the majority of SMA material is at Martensite phase at low temperature, and it will transform to Austenite phase when heated to high temperature (>120 degrees Celsius). This process is called phase transformation. When the SMA wire 5a, 5b is heated up to -80 degrees Celsius in the case of free wire about half transformation would occur (i.e. roughly 50% of Martensite and 50% of Austenite phase existing in the material), but in the case of a blocked SMA wire 5a, 5b, the transformation can hardly happen. Consequently, there is a distinct difference in resistance of the two cases, of 6%. This difference can easily be detected by the control unit 10, and if the blockage is detected, actuation power can be stopped immediately to prevent any degradation of the wire.

As an alternative (see description of Fig. 15 above), the actuator assembly 1 according to the present invention embodiments may further comprise position sensors or more generic, a position sensing system to detect position of the movable lens barrel. In addition, or alternatively, the actuator assembly 1 further comprises position sensors 15 connected to the control unit 10. The position sensors 15 comprise magnetic sensor elements 15a-c and/or optical sensor elements 15d-f in a further embodiment. In a further embodiment, the control unit 10 is further arranged to receive signals from the position sensors 15 for determining whether the moveable element 2 is at one of the at least two stable positions and to halt activation of the plurality of SMA wires 5a, 5b if the moveable element 2 is determined to be at one of the at least two stable positions.

Position of the lens barrel 2 can be sensed by a position sensor 15, and based on this information, blockage can also be detected if the lens barrel 2 doesn't move away from one of the bi-stable positions when heating power starts. In an advantageous embodiment, a magnetic principle using a Hall sensor 15a is proposed to detect lens barrel 2 position. Hall sensor is a silicon device that can sense magnetic field. There is at least one permanent magnet 15b, 15c attached to the movable lens barrel 2, and there is at least one Hall sensor 15a attached to the frame body 3 of the camera module. Alternatively, the Hall sensor(s) 15a can be attached to the lens barrel 2 and the magnet(s) 15b, 15c can be attached to the frame body 3.

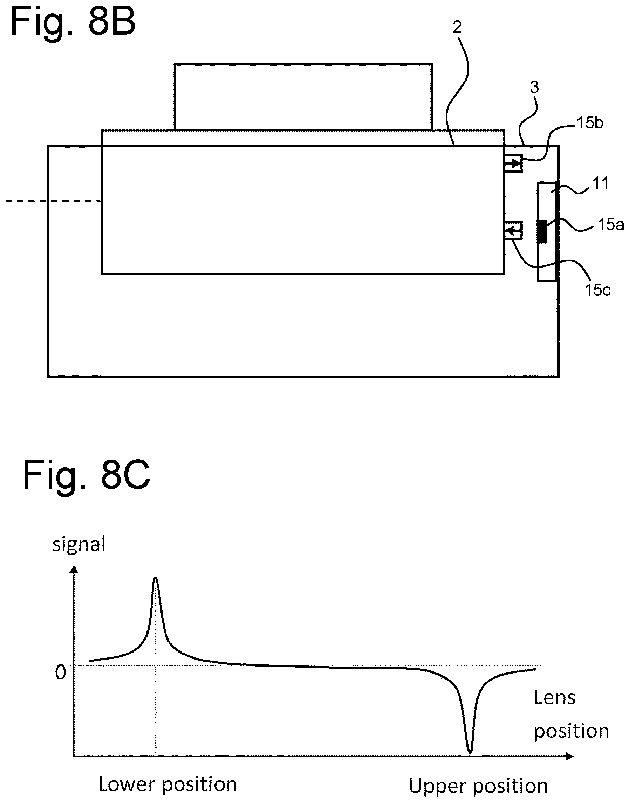

Fig. 8A-8C show an example of such a position sensing system. The position sensing system includes two permanent magnets 15b, 15c, attached to a sidewall of the lens barrel 2 (see Fig. 8A). These are aligned along the Z direction, with a mutual distance equal to the stroke of the lens barrel 2. The magnetic moments of the magnets 15b, 15c are perpendicular to the movement direction Z and point at opposite directions to each other, as shown in Fig. 8A and 8B. Driver circuitry 11, which may also include the control unit 10 driving the SMA wires 5a, 5b, is connected to the Hall sensor 15a, and is mounted at a sidewall of the frame body 3, opposite to the magnets 15b, 15c. In this example, the Hall sensor 15a is based on the horizontal Hall technology, that means, it is sensitive to the magnetic field component perpendicular to the chip plane. The position of the driver circuitry 11 is selected such that when the lens barrel 2 is at the upper or the lower position, one of the magnets 15b, 15c is aligned with the Hall sensor 15a.

The signal from the Hall sensor 15a, which is proportional to the magnetic field perpendicular to the chip plane, is plotted in Fig. 8C. The signal is positive when the magnetic field points e.g. toward the sensor plane, and is negative when the magnetic field points away from the sensor plane. When one of the magnets 15b, 15c is perfectly aligned to the Hall sensor 15a, the signal amplitude is maximum, but the signal signs of the two positions are opposite. By monitoring the sensor signal, position of the lens barrel 2 around the lower and the upper positions can be detected. For example, when the signal amplitude is maximum and positive, the lens barrel 2 is in the lower position and when signal amplitude is maximum and negative, the lens barrel 2 is in the upper position. The lower position and the upper position are stable positions. During an actuation operation, if the lens barrel 2 is detected to be blocked (Hall sensor 15a signal doesn't change as expected according to heating power), heating power can be stopped in time to prevent degradation of the SMA wires 5a, 5b. Furthermore, the position information can be used to get acknowledgement when the actuation is completed, or can be used for other purposes, such as an input for the autofocus algorithm.

As described above with reference to Fig. 15, the camera module having an actuator assembly 1 according to one of the present invention embodiments, may further include a driver circuitry 11 (e.g. an IC or a set of components) for powering and controlling the SMA wires. The driver circuitry 11 includes a power stage which generates either a DC or a modulated electrical signal for the SMA actuator assembly 1. The modulated signal may be in the form of Pulse-Width-Modulation (PWM), Pulse-Density-Modulation (PDM), etc. Heating power of the SMA wires 5a, 5b can be precisely controlled by the DC value, by the duty cycle of the PWM, or by the pulse density of the PDM signal. Generation of the electrical current is further controlled by the control unit 10, such as an integrated micro-controller within the driver circuitry 11. The driver circuitry 11 may further include a temperature sensor to sense ambient temperature, in order to adjust the amount of heating power accordingly.

In exemplary embodiments described above with reference to Fig 1A-1B, 2A-2C, and 4, a specific example was present as multi-stable positioning mechanism 4 in which double bi-stable beams 41 are used, and the point where the actuation force is applied (called loading position) is at the middle 42 of the beam 41. The purpose of the double beam 41 with central loading point 42 is to make sure the beam 41 always deforms in the even mode shape, which helps orient the lens barrel 2 always parallel to the optical axis (Z direction) during movement. Even though this design is more advantageous due to its clean and robust action, it has however a disadvantage that the required force to overcome the critical force $F_{cr}$ is rather high.

According to the model developed by Yan et. al. (W. Yan, Y. Yu, A. Mehta, "Analytical modeling for rapid design of bi-stable buckled beams", Theoretical & Applied Mechanics Letters 9 (2019) 264-272) for a single bi-stable beam, $F_{cr}$ is a function of loading position. At position 0.37 L from either anchor point on the single beam, $F_{cr}$ becomes a minimum and is equal to only 61 % of $F_{cr}$ when the loading position is at the middle (at the loading position of 0.37L, the dimensionless parameter Fo is 73.9 while at the middle, 0.5L, it is 120.28, see Eq. 1). This opens up possibility to tune the actuation force, while keeping the holding force the same.

Fig. 10 shows a schematic diagram of an alternative design where the SMA wires 5a, 5b are not hooked and coupled to the lens barrel 2, but to an off-center loading position (connection point) 7a, 7b on single bi-stable beams 41. The distance between the off-center loading position 7a and the middle point 42 is the same as the distance between the off-center loading position 7b and the middle point 42. In this design, single beams 41 are used instead of double beams, because the actuation force can't be applied to both parallel beams of the double beam structure if the loading position is not at the middle point 42 where they connect. The loading position on the single bi-stable beam 41 can be tuned to select a suitable pulling force (in the example in Fig. 10, it is assumed that the loading position is at 0.37L from either anchor point (thus $\sigma$ = 0.37). According to Eq.(1), when $\sigma$ = 0.37, $F_0(\sigma)$ is minimum and equal to 73.9, which is only 61% of $F_0(\sigma=0.5)$ = 120.28. This means, at $\sigma$ = 0.37, the required pulling force is minimum and is only 61 % of that when the loading position is at the middle of the beam 41. In order to keep the lens barrel 2 translating on a straight line along the z axis, a guiding assembly 8 is used, e.g. as shown in the form of a sliding mechanism (such as a ball bearing) is used. Because the beams 41 are pulled at an off-center (connection) point 7a, 7b, by the SMA wires 5a, 5b, they will deform partially in an odd mode shape during operation, and therefore the middle point will rotate. To facilitate the rotation, the middle point of the beams 41 is coupled to the lens barrel 2 via a pivot 42. In this way, the beam 41 can still drive the lens barrel 2 up and down along the z axis, while it can freely deform in an odd mode shape. Since the lens barrel 2 is still coupled to the beams 41 at the middle point 42, the holding force is still high, while the required pulling force is only 61 % of the holding force. That makes the actuation easier. By selecting an appropriate loading position, the pulling force can be tuned for design optimization. Moreover, it should be taken into account when designing this system is that while $F_{cr}$ decreases, $z_{cr}$ also decreases and $z_h$ is unchanged, that makes the distance $z_h$-$z_{cr}$, which is the distance that the SMA wires 5a, 5b have to bring the beam to the critical point, longer. Note that in this exemplary embodiment, the SMA wires 5a, 5b, are attached to the frame body 3 at anchor points 6a, 6b, and anchor points 6a are symmetric about a line in Z direction crossing the off-center connection points 7a, and anchor points 6b are symmetrical about a line in Z direction crossing the off-center connection points 7b. A group of anchor points 6a, 6b is centrosymmetric with another group of anchor points 6a, 6b about the middle point 42. Other positions of the anchor points 6a, 6b are also possible, e.g. as explained with reference to the Fig. 9A-9D.

Thus, in a further embodiment, the actuator assembly 1 further comprising a guiding assembly 8 for restricting mutual movement of the moveable element 2 and the frame body 3 along the movement axis Z. The guiding assembly 8 is attached to the frame body 3 and it is close to the lens barrel 2, for example, a sliding friction happens between the guiding assembly 8 and the lens barrel 2 when the lens barrel 2 moves. The guiding assembly 8 is set to guide the lens barrel 2 moves in a right direction in case that the positioning mechanism 4 doesn't move in the correct mode.

In further embodiments, a multi-stable positioning mechanism 4 is provided, i.e. having more than two stable positions. When e.g. applied in a mobile telephone lens system, the optical lens then may have multiple focal lengths. The SMA actuator assembly 1 is then adapted to move the lens barrel 2 in steps, from one stable position to the next one. Common techniques to create a multi-stable mechanism include to connect several bi-stable elements in series (Gerson, Y., Krylov, S., Ilic, B., Schreiber, D., "Large displacement low voltage multistable micro actuator," Proceedings of the IEEE 21st International Conference on Micro Electro Mechanical Systems, 463-466, 2008), or to split flexural beams into several segments having different stable positions (Dung-An Wang, Jyun-Hua Chen, Huy-Tuan Pham, "A tristable compliant micromechanism with two serially connected bi-stable mechanisms", Mechanism and Machine Theory, Vol. 71, 27-39, 2014). Another concept is to construct multiple nested frames around the movable lens barrel 2. Each frame is connected to a next outer frame by at least one bi-stable beam structure. The bi-stable structure of most inner frame is connected to the lens barrel 2, while that of the most outer frame is connected to the frame body 3. Multiple SMA wires 5a, 5b may be connected to each frame, and may be actuated separately. In this way, the lens barrel 2 can be actuated in steps through multiple stable positions separately by actuating the nested frames one by one in an appropriate order.

Besides using the mechanical beams 41 for bi-stable (or in general multi-stable mechanism), a different principle may also be used, for instance a magnetic principle. Fig. 11A-11B show an example of such a magnetic bi-stable positioning mechanism 4. The movable lens barrel 2 includes a magnet 45b which has magnetic moment in the z (vertical) direction. On the sidewall of the frame body 3, two fixed magnets 45a are provided which are aligned vertically at two positions corresponding to the desired bi-stable positions. Alternatively, there may be two movable magnets 45b on the lens barrel 2 and one fixed magnet 45a on the frame body 3. Thus, in a further embodiment of the present invention, an actuator assembly 1 is provided, wherein the multi-stable position mechanism 4 comprises a plurality of magnets 45a, 45b attached to the moveable element 2 and the frame body 3 for defining the at least two stable positions. Furthermore, the plurality of magnets 45a, 45b may comprise a first group of magnets attached to the moveable element 2, which have oppositely facing magnet poles from a second group of magnets attached to the frame body 3. Or in other words, in an embodiment, the plurality of magnets 45a, 45b comprise a first group of magnets and a second group of magnets, wherein the first group of magnets are attached to one of the moveable element 2 and the frame body 3, wherein the second group of magnets are attached to the other one of the moveable element 2 and the frame body 3, wherein the first group of magnets have oppositely facing magnet poles from the second group of magnets, wherein the first group of magnets comprises at least two magnets and the second group of magnets comprises at least one magnet. Alternatively, the plurality of magnets 45a, 45b comprise a first group of magnets and a second group of magnets, wherein the first group of magnets are attached to one of the moveable element 2 and the frame body 3, wherein the second group of magnets are attached to the other one of the moveable element 2 and the frame body 3, wherein the first group of magnets have a similar magnetic moment orientation as the second group of magnets, wherein the first group of magnets comprises at least two magnets and the second group of magnets comprises at least one magnet.

When the movable magnet 45b is aligned with one of the fixed magnets 45a, the magnetic flux of the system of the two magnets 45a, 45b is substantially closed, resulting in a minimum of the magnetostatic energy (that is the potential energy created by the magnetic moments of the magnets). When the movable magnet 45b moves slightly away from one of these two positions, the magnetostatic energy increases fast, before gradually drops back toward zero. That means, when the movable magnet 45b slightly moves away from the aligned position, there is a magnetic force pulling it back to the position. This creates a potential well around the two bi-stable positions. Therefore, the lens barrel 2 can be kept at one of these positions without consuming power.

When this magnetic bi-stable mechanism 4 is used in combination with the SMA wires 5a, 5b, the actuator assembly 1 has to pull the lens barrel 2, with maximum force, away from the bottom of a potential well. Once it is in between the wells, the required force is substantially lower. When the SMA actuator assembly 1 further brings the lens barrel 2 close to the second potential well (the second bi-stable position), the magnetic field will help pull the lens barrel 2 to the second bi-stable position without external force.

There may be several other alternatives of the magnetic bi-stable mechanism 4. In one of the alternatives, the magnetic moments of all the three magnets 45a, 45b point in the same horizontal direction (see the exemplary embodiment shown schematically in Fig. 12A-12B). When the movable magnet 45b is aligned with one of the fixed magnets 45a, the system magnetostatic energy becomes also a minimum, which creates a bi-stable position. In another alternative, either the movable magnet 45b, or the two fixed magnets 45a are replaced with a soft ferromagnetic piece (or pieces). The ferromagnetic piece is attracted by the magnet, which also creates a bi-stable position.

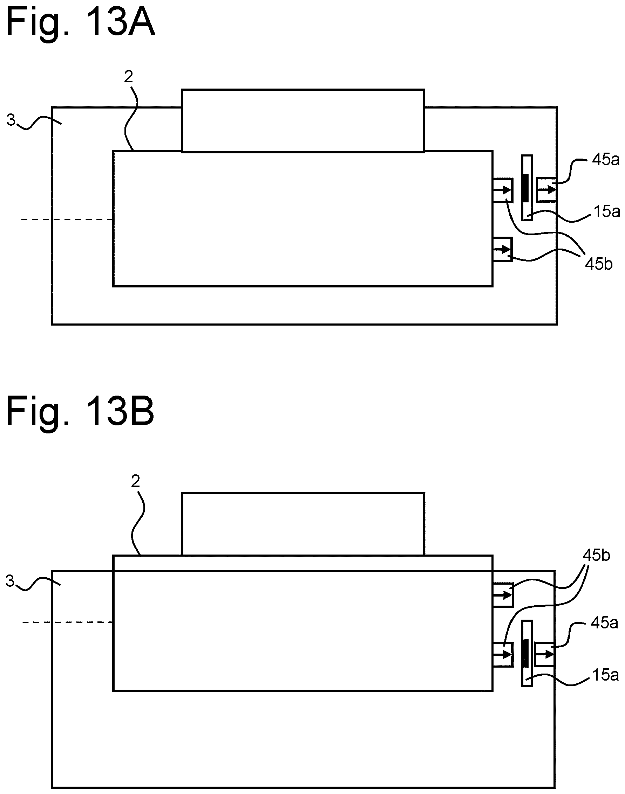

In yet another alternative, the magnetic bi-stable mechanism 4 may be combined with the position sensing system discussed above. The system according to this alternative comprises two movable magnets 45b and a fixed magnet 45a, see the schematic diagram of a further exemplary embodiment shown in Fig. 13A-13B. A magnetic sensor 15a (for instance a Hall sensor) is placed at a fixed position in the gap between one of the movable magnets 45b and the fixed magnet 45a. When the lens barrel 2 is at either bi-stable position, the Hall sensor gives a maximum signal and the signal decreases as the lens barrel 2 moves away from the bi-stable positions. In this configuration, the use of the magnets 45a, 45b is shared in the bi-stable mechanism and the position sensing. The sensitivity of the magnetic sensor 15a should be, however, selected such that the sensor is not saturated when the lens barrel 2 is at the bi-stable position, since the magnetic field in this case is strong.

As shown in the exemplary embodiments of Fig. 12A-12B and Fig. 13A-13B, thus, in a further group of embodiments, the plurality of magnets 45a, 45b may comprise a first group of magnets attached to the moveable element 2, which have a similar magnet orientation as a second group of magnets attached to the frame body 3.

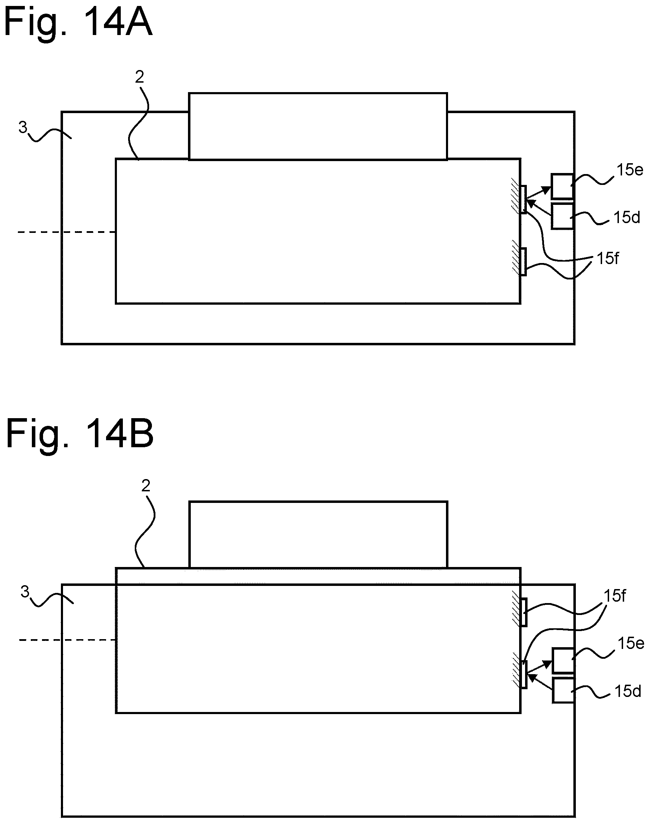

The position sensing system may, in an even further embodiment, be based on a different principle, such as an optical principle. I.e. the position sensors (15) comprise optical sensors (15d-f). A schematic diagram of an exemplary embodiment is shown in Fig. 14A-14B. As an example, a position sensing system according to this alternative may have one light emitting element 15d (e.g. an LED) and one light receiving element 15e (e.g. a photodiode) located next to each other on the sidewall of the frame body 3 (e.g. module housing). There are two reflectors 15f mounted on the movable lens barrel 2 along the z direction (vertical axis), with a mutual distance equal to the distance between the focal length positions. When the light emitting/receiving pair 15d, 15e is aligned with one of the reflectors 15f, due to high reflection, irradiance received by the light receiving element 15e, thus also its output signal, is maximum. Elsewhere away from the two aligned positions, the output signal is small, which is similar to the signal of the magnetic-based sensing system described above. In this way, position of the lens barrel 2 can be detected, and can be used to prevent degradation of SMA wires 5a, 5b due to movement blockage.

As mentioned above, when the position sensing system is optically based, it may be combined with the magnetic bi-stable positioning mechanism 4. That is to say, the actuator assembly 1 further comprises the light emitting element 15d, the light receiving element 15e and two reflectors 15f described above.

The present invention has been described above with reference to a number of exemplary embodiments as shown in the drawings. Modifications and alternative implementations of some parts or elements are possible, and are included in the scope of protection as defined in the appended claims.

**Claims**

1. Actuator assembly (1) for positioning a moveable element (2) in one of at least two stable positions with respect to a frame body (3) along a movement axis (Z),

   the actuator assembly (1) comprising a multi-stable positioning mechanism (4), and a plurality of shape-memory-alloy, SMA, wires (5a, 5b),
   the multi-stable positioning mechanism (4) being attached to the moveable element (2) and the frame body (3) and arranged to hold the mutual position of the moveable element (2) and the frame body (3) in one of the at least two stable positions along the movement axis (Z), and
   the plurality of SMA wires (5a, 5b) being attached to the moveable element (2) and the frame body (3), and arranged to apply a force between the moveable element (2) and the frame body (3) upon actuation.

2. Actuator assembly (1) according to claim 1, wherein the plurality of SMA wires (5a, 5b) comprises a first set of SMA wires (5a) arranged to apply a force to the moveable element (2) having a force component in a first direction parallel to the movement axis (Z), and a second set of SMA wires (5b) arranged to apply a force to the moveable element (2) having a force component in a second direction parallel to the movement axis (Z), opposite to the first direction.

3. Actuator assembly (1) according to claim 1 or 2, wherein the plurality of SMA wires (5a, 5b) are attached to the frame body (3) by anchor elements (6a, 6b) and to the moveable element (2) at connection points (7a, 7b).

4. Actuator assembly (1) according to any one of claims 1-3, further comprising a guiding assembly (8) for restricting mutual movement of the moveable element (2) and the frame body (3) along the movement axis (Z).

5. Actuator assembly (1) according to any one of claims 1-4, wherein the multi-stable position mechanism (4) comprises one or more bi-stable beams (41), each of the one or more bi-stable beams (41) having a middle part (42) connected to one of the moveable element (2) and the body frame (3), and outer end parts (43) connected to the other one of the moveable element (2) and the body frame (3).

6. Actuator assembly (1) according to claim 5, wherein the one or more bi-stable beams (41) each comprise at least two parallel beams connected to each other in the middle, with outer end parts (43) of the at least two parallel beams connected to the frame body (3).

7. Actuator assembly (1) according to claim 5 or 6, wherein the one or more bi-stable beams (41) are in a pre-compressed state.

8. Actuator assembly (1) according to any one of claims 1-4, wherein the multi-stable position mechanism (4) comprises a plurality of magnets (45a, 45b) attached to the moveable element (2) and the frame body (3) for defining the at least two stable positions.

9. Actuator assembly (1) according to claim 8, wherein the plurality of magnets (45a, 45b) comprise a first group of magnets and a second group of magnets, wherein the first group of magnets are attached to one of the moveable element (2) and the frame body (3), wherein the second group of magnets are attached to the other one of the moveable element (2) and the frame body (3), wherein the first group of magnets have oppositely facing magnet poles from the second group of magnets, wherein the first group of magnets comprises at least two magnets and the second group of magnets comprises at least one magnet.

10. Actuator assembly (1) according to claim 8, wherein the plurality of magnets (45a, 45b) comprise a first group of magnets and a second group of magnets, wherein the first group of magnets are attached to one of the moveable element (2) and the frame body (3), wherein the second group of magnets are attached to the other one of the moveable element (2) and the frame body (3), wherein the first group of magnets have a similar magnetic moment orientation as the second group of magnets, wherein the first group of magnets comprises at least two magnets and the second group of magnets comprises at least one magnet.

11. Actuator assembly (1) according to any one of claims 1-10, further comprising stop elements (9) attached to the frame body (3) and/or the moveable element (2).

12. Actuator assembly (1) according to any one of claims 1-11, further comprising a control unit (10) connected to the plurality of SMA wires (5a, 5b).

13. Actuator assembly (1) according to claim 12, wherein the control unit (10) is arranged to monitor voltage and/or current levels to each of the plurality of SMA wires (5a, 5b) and to determine whether a relative resistance change of the plurality of SMA wires (5a, 5b) differs from a free condition by more than a threshold ratio and to halt activation of the plurality of SMA wires (5a, 5b) when the relative resistance change of the plurality of SMA wires (5a, 5b) differs from the free condition by more than the threshold ratio.

14. Actuator assembly (1) according to claim 12, further comprising position sensors (15), wherein the position sensors (15) are connected to the control unit (10), wherein the control unit (10) is further arranged to receive signals from the position sensors (15) for determining whether the moveable element (2) is blocked and to halt activation of the plurality of SMA wires (5a, 5b) if the moveable element (2) is determined to be blocked,

15. Actuator assembly (1) according to claim 14, wherein the position sensors (15) comprise magnetic sensor elements (15a-c) and/or optical sensor elements (15d-f).

# Fig. 1A

# Fig. 1B

# Fig. 2A

# Fig. 2B

# Fig. 2C

# Fig. 3

## Fig. 4

## Fig. 5A

## Fig. 5B

# Fig. 6A

| 5b | 5b | 5b | 5b |

~ 11b

| 11 |

~ 11a

| 5a | 5a | 5a | 5a |

# Fig. 6B

| 5b | 5b | | 5b | 5b |

11b ~                    ~ 11d

| 11 |

11a ~                    ~ 11c

| 5a | 5a | | 5a | 5a |

## Fig. 6C

## Fig. 6D

# Fig. 7

# Fig. 8A

# Fig. 8B

# Fig. 8C

Fig. 9A

Fig. 9B

Fig. 9C

Fig. 9D

# Fig. 10

# Fig. 11A

# Fig. 11B

## Fig. 12A

2

3

45a

45b

## Fig. 12B

2

3

45b

45a

# Fig. 13A

# Fig. 13B

## Fig. 14A

## Fig. 14B

# Fig. 15

Europäisches
Patentamt

European
Patent Office

Office européen
des brevets

# EUROPEAN SEARCH REPORT

**Application Number**

**EP 22 16 3526**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2008/099155 A1 (1 LTD [GB]; TOPLISS RICHARD [GB] ET AL.) 21 August 2008 (2008-08-21) * page 6, line 26 – page 24, line 10; figures 1-9 * | 1-15 | INV. G02B7/02 G02B7/10 G02B13/00 F03G7/06 G03B5/00 |
| A,D | US 2020/310224 A1 (FANG YINLI [CN] ET AL) 1 October 2020 (2020-10-01) * the whole document * | 1-15 | ADD. G02B15/14 |

**TECHNICAL FIELDS SEARCHED (IPC)**

G02B
F03G
G03B
G03D

The present search report has been drawn up for all claims

| Place of search | Date of completion of the search | Examiner |
|---|---|---|
| Munich | 7 September 2022 | Zwerger, Markus |

EPO FORM 1503 03.82 (P04C01)

## ANNEX TO THE EUROPEAN SEARCH REPORT
## ON EUROPEAN PATENT APPLICATION NO.

**EP 22 16 3526**

This annex lists the patent family members relating to the patent documents cited in  the above-mentioned European search report.
The members are as contained in the European Patent Office EDP file on
The European Patent Office is in no way liable for these particulars which are merely given for the purpose of information.

07-09-2022

| Patent document cited in search report | | Publication date | Patent family member(s) | | Publication date |
|---|---|---|---|---|---|
| WO 2008099155 | A1 | 21-08-2008 | GB | 2457860 A | 02-09-2009 |
| | | | GB | 2467481 A | 04-08-2010 |
| | | | US | 2010074607 A1 | 25-03-2010 |
| | | | WO | 2008099155 A1 | 21-08-2008 |
| US 2020310224 | A1 | 01-10-2020 | EP | 3739383 A1 | 18-11-2020 |
| | | | US | 2020310224 A1 | 01-10-2020 |
| | | | WO | 2019137048 A1 | 18-07-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7342606 B

- US 20200310224 A

**Non-patent literature cited in the description**

- **W. YAN ; Y. YU ; A. MEHTA.** Analytical modeling for rapid design of bi-stable buckled beams. *Theoretical & Applied Mechanics Letters,* 2019, vol. 9, 264-272
- **GERSON, Y. ; KRYLOV, S. ; ILIC, B. ; SCHREIBER, D.** *Proceedings of the IEEE 21st International Conference on Micro Electro Mechanical Systems,* 2008, 463-466

- **DUNG-AN WANG ; JYUN-HUA CHEN ; HUY-TUAN PHAM.** A tristable compliant micromechanism with two serially connected bi-stable mechanisms. *Mechanism and Machine Theory,* 2014, vol. 71, 27-39